# DEMANDE DE BREVET EUROPEEN

(11) **EP 1 223 554 A1**
(43) Date de publication de la demande: **17.07.2002**
(21) Numéro de dépôt: 01204440.0
(22) Date de dépôt: 21.11.2001
(51) Int. Cl.: G06T 5/20

(54) **Méthode de réduction de bruit**

(30) Priorité: 28.11.2000 FR 0015355
(71) Demandeur: Koninklijke Philips Electronics N.V., 5621 BA Eindhoven (NL)
(72) Inventeur: Ruol, Vincent, 75008 Paris (FR); Del Corso, Sandra, 75008 Paris (FR)
(74) Mandataire: Chaffraix, Jean

(57) **Abrégé**

Une méthode de réduction de bruit dans des images formées de régions uniformes et de textures, délimitées par des contours, comprend une étape de filtrage de ces images, une étape de détection des contours et des textures dans ces images, une sous-étape de réaffectation ou non de chaque pixel d'image à un contour ou une texture selon le résultat d'un test de connectivité, cette sous-étape étant située en sortie de l'étape de détection des contours et des textures, et une étape de sélection pour éliminer ou, au contraire, appliquer à chaque pixel d'image ce filtrage selon que ce pixel d'image appartient ou non à un contour ou à une texture.

Une telle méthode permet une réduction du bruit présent dans une image ou une séquence d'images non traitée, tout en conservant les contours et les textures. La méthode concernée peut être appliquée, par exemple, en tant que premier maillon d'une chaîne de codage vidéo telle une chaîne de compression MPEG2.

## Description

### DOMAINE TECHNIQUE

L'invention concerne une méthode de réduction de bruit dans des images formées de régions uniformes et de textures, délimitées par des contours, comprenant en parallèle une étape de filtrage desdites images et une étape de détection des contours et des textures dans ces images ainsi qu'une étape de sélection pour éliminer ou, au contraire, appliquer à chaque pixel d'image ledit filtrage selon que ce pixel d'image appartient ou non à un contour ou à une texture. L'invention concerne également un système de traitement d'images permettant de mettre en oeuvre cette méthode, ainsi qu'un programme d'ordinateur destiné à la mise en oeuvre de cette méthode. L'invention peut être appliquée, par exemple, dans des systèmes de codage d'images, comme les codeurs MPEG2.

### ETAT DE LA TECHNIQUE ANTERIEURE

Les procédés d'acquisition d'images, tels des caméras ou des amplificateurs, induisent différentes perturbations, que l'on regroupera sous le terme de 'bruit', qui peuvent être gênantes pour la compréhension et le traitement des images. Ce bruit dégrade la qualité de l'image et accroît la mémoire nécessaire pour stocker une image lorsque l'on réalise une compression de cette image. L'utilisation de filtres permet de réduire ce bruit, mais dégrade les contours et les textures de l'image. Les textures sont les parties de l'image non uniformes, par exemple une pelouse, par opposition aux parties de l'image uniformes comme un ciel bleu sans nuages.

L'architecture typique d'un réducteur de bruit, tel celui décrit dans la figure 5 du brevet US5974197, comprend une étape de filtrage et une étape de détection des contours et des textures qui permet d'appliquer ou ne pas appliquer le filtrage à un pixel d'image suivant que ce pixel appartient ou non à un contour ou une texture.

### RESUME DE L'INVENTION

Un premier but de l'invention est de proposer une méthode permettant d'améliorer le critère de sélection du filtrage sélectif.

Selon l'invention, une méthode de réduction de bruit telle que définie dans le paragraphe d'ouverture comprend les caractéristiques suivantes. La méthode de réduction de bruit comprend en outre, en sortie de l'étape de détection des contours et des textures, une sous-étape de réaffectation ou non de chaque pixel d'image à un contour ou une texture selon le résultat d'un test de connectivité.

Un deuxième but de l'invention est de proposer un programme d'ordinateur destiné à la mise en oeuvre de cette méthode.

Un troisième but de l'invention est de proposer un système de traitement d'images permettant de mettre en oeuvre ladite méthode.

L'invention prend les aspects suivants en considération. Le bruit joue un rôle important dans le codage de séquences d'images comme MPEG (MPEG est l'abréviation de l'expression anglaise Moving Pictures Expert Group, qui signifie groupe expert des images en mouvement). Le bruit dans une séquence d'images est néfaste, non seulement parce qu'il dégrade la qualité de l'image, mais aussi parce qu'il complique le codage de cette séquence d'images. En effet, la compression est réalisée en exploitant la redondance des éléments présents dans la séquence d'images. Le bruit aléatoire ne présentant, par définition, aucune redondance, son codage est plus difficile que le codage d'un élément redondant, ce qui fait que le nombre de bits utilisés pour coder une séquence d'images bruitées est plus important que pour une séquence d'images non bruitées.

Selon l'art antérieur, le traitement appliqué à une séquence d'images pour réduire le bruit présent dans cette séquence d'images avant de procéder au codage de cette séquence d'images possède les caractéristiques suivantes. Un premier dispositif de filtres est appliqué afin d'éliminer le bruit impulsionnel présent dans la séquence d'images. Ce premier dispositif de filtres permet d'obtenir une deuxième séquence d'images où une partie du bruit a disparu et où les contours et les textures sont conservés. Un deuxième dispositif de filtres est ensuite appliqué à la deuxième séquence d'images afin d'éliminer le bruit temporel. Ce deuxième dispositif de filtres dégrade généralement les contours et rend les textures floues. Pour limiter la dégradation des contours et des textures, un dispositif de détection des contours et des textures est utilisé, afin de ne pas appliquer le deuxième dispositif de filtres aux pixels appartenant à des contours et des textures de la deuxième séquence d'images et d'appliquer le deuxième dispositif de filtres aux pixels de la deuxième séquence d'images qui n'appartiennent ni à des contours ni à des textures. Ceci permet d'obtenir une troisième séquence d'images où une grande partie du bruit a disparu et où les contours et les textures sont conservés.

Cependant, une partie du bruit présent dans la séquence d'images non traitées n'est pas filtrée par le premier dispositif de filtres et est considérée comme faisant partie de contours ou de textures par le dispositif de détection des contours et des textures. Ce bruit n'est donc pas filtré par le deuxième dispositif de filtres et se trouve présent dans la troisième séquence d'images, ce qui en complique le codage.

Le principe suivant permet de réduire la partie du bruit qui subsiste dans la troisième séquence d'images. Après le dispositif de détection des contours et des textures, un dispositif permettant d'effectuer un test de connectivité est appliqué à la deuxième séquence d'images. Une image binaire est générée par le dispositif de détection des contours et des textures, les pixels appartenant à des contours ou des textures obtenant la valeur 1 et les pixels n'appartenant ni à des contours ni à des textures obtenant la valeur 0. Pour chaque pixel ayant la valeur 1, le dispositif permettant d'effectuer le test de connectivité compte le nombre de pixels adjacents ayant la valeur 1. Si ce nombre est supérieur ou égal à un certain seuil N (N étant un nombre entier compris entre 1 et 8), le pixel correspondant est considéré comme appartenant à un contour ou à une texture. Si ce nombre est strictement inférieur à ce même seuil N, le pixel correspondant est considéré comme n'appartenant ni à un contour ni à une texture. Les pixels de l'image binaire générée par le dispositif de détection des contours et des textures ayant la valeur 0 ne sont pas traités par le dispositif permettant d'effectuer le test de connectivité, et gardent la valeur 0.

L'invention et des caractéristiques additionnelles qui peuvent être utilisées avec avantage pour mettre en oeuvre l'invention, seront décrites ci-dessous plus en détail par référence à des figures.

### BREVE DESCRIPTION DES FIGURES

La figure 1 est un diagramme conceptuel illustrant les caractéristiques de l'invention ;
La figure 2 est un diagramme bloc illustrant un exemple d'utilisation de l'invention dans une chaîne de codage vidéo ;
La figure 3 est un diagramme bloc illustrant un exemple de réalisation de l'invention ;
Les figure 4a et 4b illustrent chacune un filtre permettant de réaliser la détection de contours et de textures ;
La figure 5a est un diagramme bloc illustrant une méthode de réalisation du test de connectivité et les figures 5b et 5c illustrent chacune un exemple du test de connectivité ;
La figure 6 est un diagramme bloc illustrant un exemple du dispositif de sélection.

### MODE DE REALISATION DE L'INVENTION

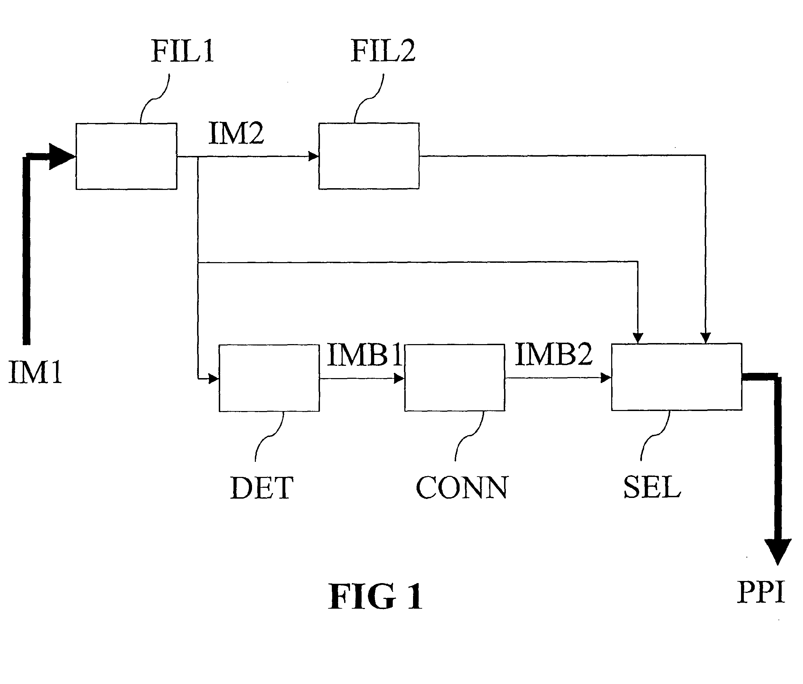

La figure 1 illustre des caractéristiques de l'invention décrites précédemment. Un système de traitement d'images comprend un premier dispositif [FIL1] de filtres, un deuxième dispositif [FIL2] de filtres, un dispositif [DET] de détection des contours et des textures, un dispositif [CONN] permettant d'effectuer un test de connectivité et un dispositif [SEL] de sélection.

Une première séquence d'images [IM1] est appliquée à l'entrée du premier dispositif [FIL1] de filtres. Le rôle de ce premier dispositif [FIL1] de filtres est d'éliminer dans la première séquence d'images [IM1] tous les pixels qui apparaissent de manière évidente comme du bruit, en particulier les pixels de bruit impulsionnel. Le premier dispositif [FIL1] de filtres est un dispositif de filtres qui sert à éliminer une partie de ce bruit tout en conservant les contours et les textures. A la sortie de ce premier dispositif [FIL1] de filtres, on obtient une deuxième séquence d'images [IM2]. La deuxième séquence d'images [IM2] est appliquée à l'entrée du dispositif [DET] de détection des contours et des textures. Ce dispositif [DET] de détection des contours et des textures génère une première séquence d'images binaires [IMB1] à partir de la deuxième séquence d'images [IM2], les pixels considérés comme appartenant à un contour ou à une texture recevant la valeur 1 et les pixels considérés comme n'appartenant ni à un contour ni à une texture recevant la valeur 0. Cette première séquence d'images binaires [IMB1] est appliquée à l'entrée du dispositif [CONN] permettant d'effectuer le test de connectivité. Pour chaque pixel de la première séquence d'images binaires [IMB1] ayant la valeur 1, le dispositif [CONN] permettant d'effectuer le test de connectivité compte le nombre de pixels adjacents ayant la valeur 1. Si ce nombre est supérieur ou égal à un certain seuil N (N étant un nombre entier compris entre 1 et 8), le pixel correspondant est considéré comme appartenant à un contour ou à une texture et garde alors sa valeur 1. Si ce nombre est strictement inférieur à ce même seuil N, le pixel correspondant est considéré comme n'appartenant ni à un contour ni à une texture et reçoit alors la valeur 0. Les pixels de la première séquence d'images binaires [IMB1] ayant la valeur 0 gardent cette valeur 0. On obtient ainsi une deuxième séquence d'images binaires [IMB2] à la sortie du dispositif [CONN] permettant d'effectuer le test de connectivité. Le dispositif de sélection permet d'appliquer le deuxième dispositif [FIL2] de filtres à un pixel de la deuxième séquence d'images [IM2] si le pixel correspondant dans la deuxième séquence d'images binaires [IMB2] a la valeur 0 et de ne pas appliquer le deuxième dispositif [FIL2] de filtres à un pixel de la deuxième séquence d'images [IM2] si le pixel correspondant dans la deuxième séquence d'images binaires [IMB2] a la valeur 1. Le dispositif [SEL] de sélection permet d'obtenir une séquence d'images prétraitée [PPI].

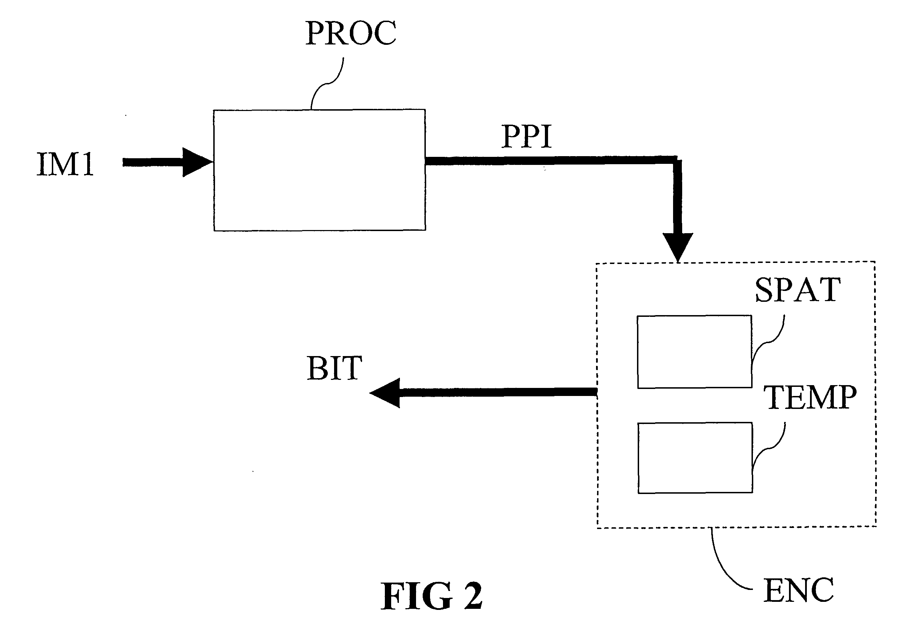

La figure 2 illustre un exemple d'utilisation de l'invention dans un dispositif de codage vidéo MPEG2. Le dispositif de codage vidéo MPEG2 comprend un dispositif [PROC] de traitement d'images et un codeur [ENC] MPEG2 comprenant un dispositif [SPAT] permettant de réaliser une compression spatiale et un dispositif [TEMP] permettant de réaliser une compression temporelle.

La première séquence d'images [IM1] est appliquée à l'entrée du dispositif [PROC] de traitement d'images décrit sur la figure 1. On obtient ainsi à la sortie de ce dispositif [PROC] de traitement d'images une séquence d'images prétraitées [PPI]. Cette séquence d'images prétraitées [PPI] est codée par le codeur [ENC] MPEG2 et on obtient des données binaires [BIT] codant cette séquence d'images prétraitées [PPI].

Le dispositif [SPAT] permettant de réaliser la compression spatiale analyse la séquence d'images prétraitées [PPI] pour déterminer les informations redondantes à l'intérieur d'une image de cette séquence d'images prétraitées [PPI] et élimine les fréquences qui ne sont pas visibles pour l'oeil humain. Le dispositif [SPAT] permettant de réaliser la compression spatiale utilise une DCT (DCT est l'abréviation de l'expression anglaise Discrete Cosine Transform) qui convertit les informations contenues dans une image de la séquence d'images prétraitées [PPI] du domaine spatial au domaine fréquentiel afin d'éliminer les fréquences possédant une faible amplitude et les hautes fréquences, qui ne sont pas perceptibles par l'oeil humain.

Le dispositif [TEMP] permettant de réaliser la compression temporelle utilise les différences entre des images successives de la séquence d'images prétraitées [PPI]. La première image de la séquence d'images prétraitées [PPI] contient toutes les informations nécessaires pour décrire les images suivantes tant qu'il n'y a pas de mouvement. Il n'est donc pas utile de coder les informations des images qui suivent la première image de la séquence d'images prétraitées [PPI] tant qu'il n'y a pas de mouvement. Par conséquent, on peut se contenter de coder uniquement les informations de mouvement dans une image qui suit la première image de la séquence d'images prétraitées [PPI]. Le dispositif [TEMP] permettant de réaliser la compression temporelle utilise successivement une estimation de mouvement, une compensation de mouvement et une prédiction, qui permettent de déterminer la quantité d'informations relatives au mouvement entre 2 images de la séquence d'images prétraitées [PPI].

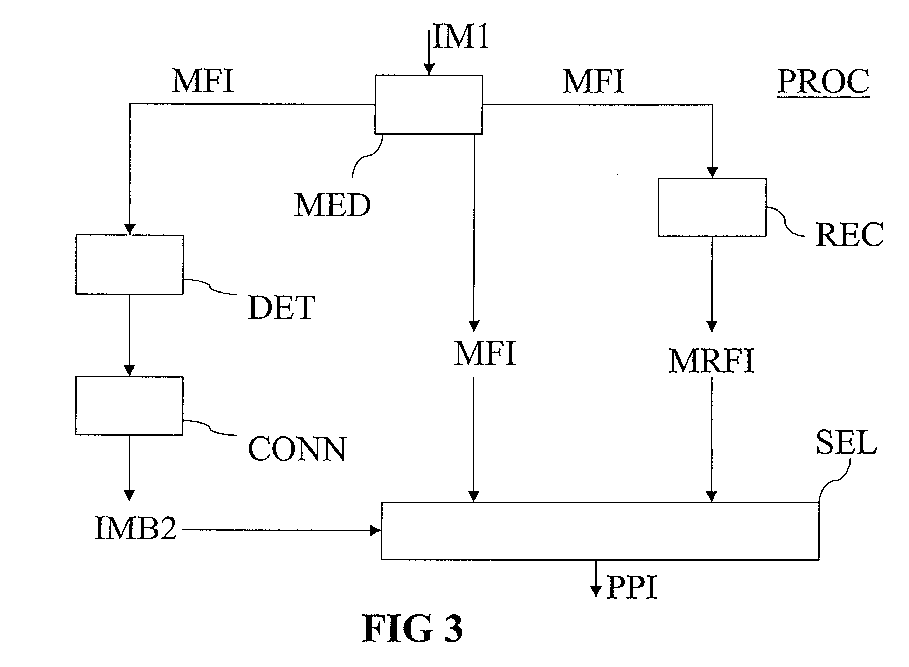

La figure 3 illustre un exemple de réalisation de l'invention. Le système de traitement d'images [PROC] présent sur la figure 2 comprend un filtre médian [MED], un filtre récursif spatio-temporel [REC], le dispositif [DET] de détection des contours et des textures, le dispositif [CONN] permettant d'effectuer le test de connectivité et le dispositif [SEL] de sélection.

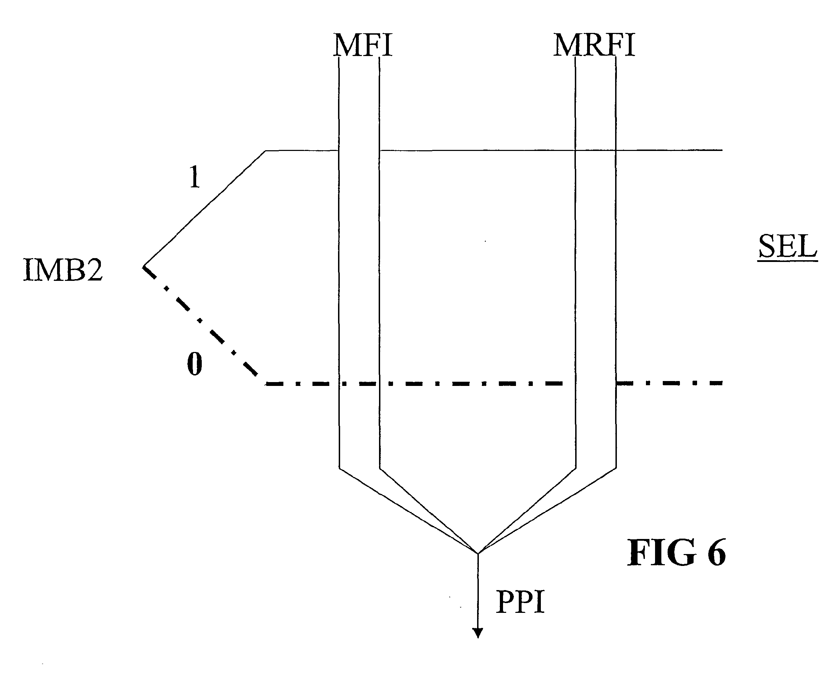

La première séquence d'images [IM1] est appliquée à l'entrée du filtre médian [MED]. Le rôle de ce filtre médian [MED] est d'éliminer les bruits haute fréquence, comme le bruit de grenaille ('shot noise' en anglais) provoqué par les fluctuations aléatoires du signal électrique lors de l'acquisition de la première séquence d'images [IM1], tout en préservant les contours et les textures. Le filtre médian [MED] est un filtre non linéaire agissant sur le voisinage d'un pixel donné dans une des images de la première séquence d'images [IM1]. Par exemple, le filtre médian peut agir sur un voisinage comprenant le pixel donné et ses 8 plus proches voisins. Les niveaux de gris de ces 9 pixels sont triés par valeurs croissantes et le pixel central reçoit la valeur médiane de ces 9 niveaux de gris. Cette opération est réalisée pour tous les pixels de toutes les images de la première séquence d'images [IM1], afin d'obtenir une séquence d'images filtrées médian [MFI]. La détection de contours et de textures puis le test de connectivité sont réalisés à partir de la séquence d'images filtrées médian [MFI] comme il a été décrit sur la figure 1 et permettent d'obtenir la deuxième séquence d'images binaires [IMB2]. La séquence d'images filtrées médian [MFI] est également traitée par le filtre récursif spatio-temporel [REC] pour donner une séquence d'images filtrées médian-récursif [MRFI]. Le rôle de ce filtre récursif spatio-temporel [REC] est de lisser l'image afin d'éliminer une partie du bruit qui n'a pas été éliminée par le filtre médian [MED]. Le filtre récursif spatio-temporel [REC] possède une structure du type filtre de Kalman. Le rôle et le fonctionnement du dispositif [SEL] de sélection seront précisés sur la figure 6. A la sortie de ce dispositif [SEL] de sélection, on obtient la séquence d'images prétraitées [PPI].

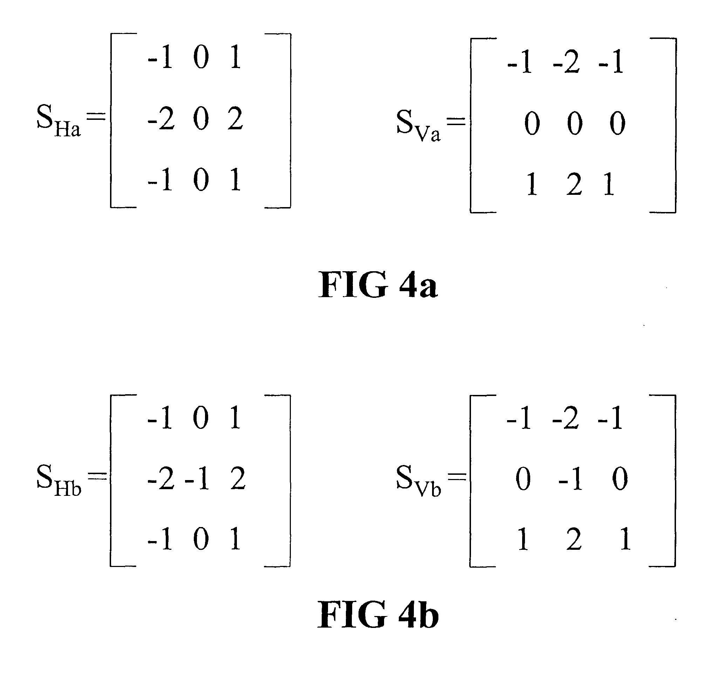

La figure 4a illustre un filtre permettant de réaliser la détection de contours et de textures. Le filtre comprend un masque de Sobel horizontal [S_{Ha}] et un masque de Sobel vertical [S_{Va}].

La méthode permettant de réaliser la détection de contours et de textures est la suivante. Pour un pixel P donné dans une séquence d'images où l'on désire détecter les contours et les textures, on considère le voisinage V constitué par ce pixel P et ces 8 plus proches voisins. On place le masque de Sobel horizontal [S_{Ha}] sur ce voisinage et on effectue les 9 produits du niveau de gris de chaque pixel du voisinage V par la valeur du masque de Sobel horizontal [S_{Ha}] le recouvrant. On effectue ensuite la somme Σ_{Ha} de ces 9 produits. On place le masque de Sobel vertical [S_{Va}] sur ce voisinage et on effectue les 9 produits du niveau de gris de chaque pixel du voisinage V par la valeur du masque de Sobel vertical [S_{Va}] le recouvrant. On effectue ensuite la somme Σ_{Va} de ces 9 produits. On effectue ensuite la somme Σₐ des carrés de Σ_{Ha} et de Σ_{Va}. Puis on se fixe un seuil S en fonction du niveau de détection des contours et des textures désiré. Si la somme Σₐ est plus grande que ce seuil S, le pixel P est considéré comme appartenant à un contour ou à une texture et reçoit la valeur 1. Si la somme Σₐ est plus petite que ce seuil S, le pixel P est considéré comme n'appartenant ni à un contour ni à une texture et reçoit la valeur 0. Cette opération est réalisée pour tous les pixels de toutes les images de la séquence d'images où l'on veut détecter les contours et les textures. On obtient ainsi une séquence d'images binaires où les pixels considérés comme appartenant à un contour ou à une texture ont la valeur 1 et les pixels considérés comme n'appartenant ni à un contour ni à une texture ont la valeur 0. L'inconvénient de ce filtre est qu'il n'est pas très performant pour détecter les textures.

La figure 4b illustre un autre filtre permettant de réaliser la détection de contours et de textures. Le filtre comprend un masque de Sobel horizontal [S_{Hb}] et un masque de Sobel vertical [S_{Vb}], qui ne diffèrent de [S_{Ha}] et de [S_{Va}] que par leurs valeurs centrales.

La méthode permettant de réaliser la détection de contours et de textures est la même que celle décrite dans la figure 4a. L'avantage de ce filtre est qu'il est plus performant que le filtre décrit dans la figure 4a pour détecter les textures.

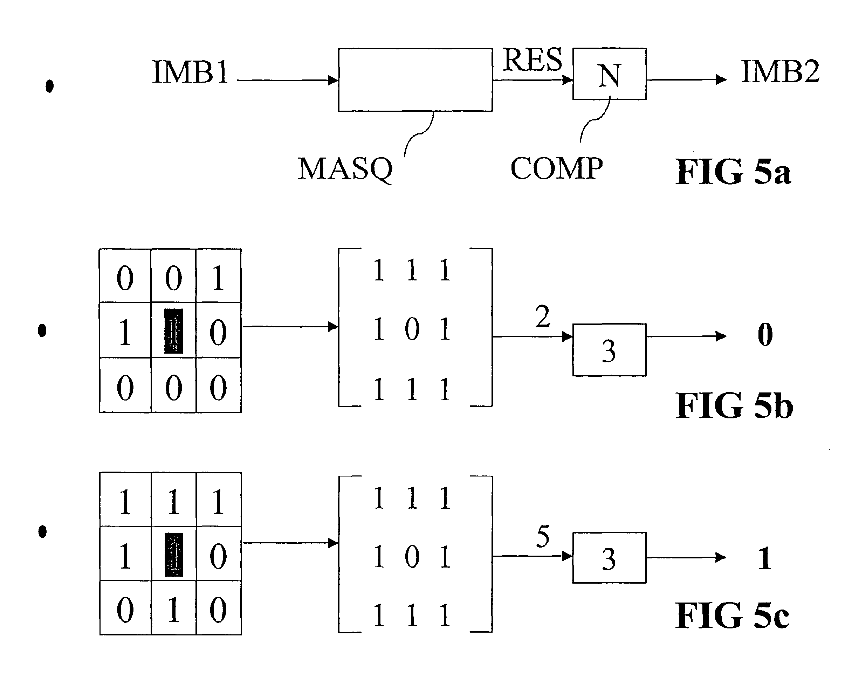

La figure 5a illustre une méthode de réalisation pour le dispositif [CONN] de la figure 1 permettant d'effectuer le test de connectivité. Le dispositif [CONN] permettant d'effectuer le test de connectivité comprend un filtre en masque [MASQ] et un comparateur [COMP].

La première séquence d'images binaires [IMB1] à la sortie du dispositif de détection des contours et des textures est appliquée à l'entrée du filtre en masque [MASQ]. Ce filtre en masque [MASQ] génère un résultat [RES] qui est comparé à un seuil N (N étant un nombre entier compris entre 1 et 8) par le comparateur [COMP]. Ce comparateur permet d'obtenir la deuxième séquence d'images binaires [IMB2]. Le filtre en masque [MASQ] comprend 9 valeurs, toutes égales à 1 sauf la valeur centrale du filtre en masque [MASQ].

Le fonctionnement du dispositif [CONN] permettant d'effectuer le test de connectivité est le suivant. Pour un pixel P donné (ayant la valeur 1) dans la première séquence d'images binaires [IMB1], on considère le voisinage V constitué par ce pixel P et ces 8 plus proches voisins. On place le filtre en masque [MASQ] sur ce voisinage et on effectue les 9 produits du niveau de gris de chaque pixel du voisinage V par la valeur du filtre en masque [MASQ] le recouvrant. On effectue ensuite la somme de ces 9 produits pour obtenir le résultat [RES]. Il est facile de constater que ce résultat [RES] correspond au nombre de pixels adjacents du pixel P ayant la valeur 1, c'est à dire étant considérés à la sortie du dispositif de détection des contours et des textures comme appartenant à un contour ou à une texture. Si ce résultat [RES] est supérieur ou égal au seuil N, le pixel P est considéré comme appartenant à un contour ou à une texture et la valeur du pixel de la deuxième séquence d'images binaires [IMB2] correspondant au pixel P sera égale à 1. Si ce résultat [RES] est strictement inférieur au seuil N, le pixel P est considéré comme n'appartenant ni à un contour ni à une texture et la valeur du pixel de la deuxième séquence d'images binaires [IMB2] correspondant au pixel P sera égale à 0. Les pixels ayant la valeur 0 dans la première séquence d'images binaires [IMB1] ne sont pas traités par le dispositif [CONN] permettant d'effectuer le test de connectivité et gardent la valeur 0 dans la deuxième séquence d'images binaires [IMB2].

La figure 5b illustre un exemple permettant de comprendre le fonctionnement du dispositif [CONN] permettant d'effectuer le test de connectivité. Dans cet exemple, le seuil N est fixé à 3. Pour un pixel P (ayant la valeur 1) dans la première séquence d'images binaires [IMB1] ayant seulement 2 voisins adjacents appartenant à un contour ou à une texture, le résultat [RES] à la sortie du filtre en masque [MASQ] est 2. Ce chiffre étant strictement inférieur au seuil N fixé à 3, la valeur du pixel de la deuxième séquence d'images binaires [IMB2] correspondant au pixel P sera égale à 0.

La figure 5c illustre un autre exemple permettant de comprendre le fonctionnement du dispositif [CONN] permettant d'effectuer le test de connectivité. Dans cet exemple, le seuil N est fixé à 3. Pour un pixel P (ayant la valeur 1) dans la première séquence d'images binaires [IMB1] ayant 5 voisins adjacents appartenant à un contour ou à une texture, le résultat [RES] à la sortie du filtre en masque [MASQ] est 5. Ce chiffre étant supérieur au seuil N fixé à 3, la valeur du pixel de la deuxième séquence d'images binaires [IMB2] correspondant au pixel P sera égale à 1.

La figure 6 illustre un exemple du dispositif [SEL] de sélection présent dans la figure 3. Les signes entre crochets qui apparaissent dans la description de cette figure et qui ne figurent pas sur cette figure font référence à la figure 3. La deuxième séquence d'images binaires [IMB2] à la sortie du dispositif [CONN] permettant d'effectuer le test de connectivité sert de commande au dispositif [SEL] de sélection. Cette deuxième séquence d'images binaires [IMB2] est constituée de pixels qui valent 1 s'ils sont considérés comme appartenant à un contour ou à une texture et qui valent 0 s'ils sont considérés comme n'appartenant ni à un contour ni à une texture. Lorsqu'un pixel donné de la deuxième séquence d'images binaires [IMB2] vaut 1, le pixel correspondant dans la séquence d'images prétraitée [PPI] est le pixel correspondant dans la séquence d'images filtrées médian [MFI]. Lorsqu'un pixel donné de la deuxième séquence d'images binaires [IMB2] vaut 0, le pixel correspondant dans la séquence d'images prétraitée [PPI] est le pixel correspondant dans la séquence d'images filtrées médian-récursif [MRFI].

Le système de traitement d'images illustré aux figures 2-6 est un exemple d'application des caractéristiques illustrées à la figure 1. Les dispositifs de filtre [FIL1, FIL2] illustrés à la figure 1 prennent respectivement la forme d'un filtre médian [MED] et d'un filtre récursif spatio-temporel [REC].

La description ci-dessus en référence aux figures illustre l'invention plutôt qu'elle ne la limite. Il est évident qu'il existe de nombreuses alternatives qui rentrent dans la portée des revendications ci-jointes. A cet égard, quelques remarques sont faites ci-dessous.

Il existe de nombreuses manières pour détecter les contours et les textures dans une séquence d'images donnée. La figure 4 illustre seulement une mise en oeuvre possible dans laquelle les masques utilisés sont dérivés des masques de Sobel classiques, qui s'appliquent sur un voisinage comprenant 9 pixels. Il est possible d'utiliser d'autres masques pour détecter les contours et les textures, avec des dimensions différentes.

Il existe de nombreuses manières pour effectuer un test de connectivité dans une séquence d'images donnée. La figure 5 illustre seulement une mise en oeuvre possible dans laquelle le test de connectivité est réalisé grâce à un masque qui s'applique sur un voisinage comprenant 9 pixels. Il est possible d'utiliser d'autres masques pour effectuer le test de connectivité, avec des dimensions différentes.

## Revendications

1. Méthode de réduction de bruit dans des images formées de régions uniformes et de textures, délimitées par des contours, comprenant en parallèle les deux étapes suivantes :
- une étape de filtrage desdites images ;
- une étape de détection des contours et des textures dans ces images ainsi qu'une étape de sélection pour éliminer ou, au contraire, appliquer à chaque pixel d'image ledit filtrage selon que ce pixel d'image appartient ou non à un contour ou à une texture, ladite méthode étant **caractérisée en ce qu'**elle comprend en sortie de l'étape de détection des contours et des textures une sous-étape de réaffectation ou non de chaque pixel d'image à un contour ou une texture selon le résultat d'un test de connectivité.

2. Programme d'ordinateur exécutable par l'intermédiaire d'un processeur, destiné à la mise en oeuvre d'une méthode de réduction de bruit selon la revendication 1.

3. Système de traitement d'images formées de régions uniformes et de textures, délimitées par des contours, comprenant en parallèle :
- un dispositif de filtrage desdites images ;
- un dispositif de détection des contours et des textures dans ces images ainsi qu'un dispositif de sélection pour éliminer ou, au contraire, appliquer à chaque pixel d'image ledit filtrage selon que ce pixel d'image appartient ou non à un contour ou à une texture, ledit système étant **caractérisé en ce qu'**il comprend en sortie dudit dispositif de détection des contours et des textures un dispositif de test de connectivité pour réaffecter ou non chaque pixel d'image à un contour ou une texture selon un critère prédéterminé.

4. Système de traitement d'images selon la revendication 3 **caractérisé en ce que** ledit dispositif de test de connectivité comprend un filtre en masque, un comparateur de la sortie de ce filtre à un nombre prédéterminé et un circuit de décision d'affectation ou non de chaque pixel d'image à un contour ou une texture selon le résultat de ladite comparaison.

5. Chaîne de codage vidéo de type MPEG précédé d'une méthode de réduction de bruit selon la revendication 1 ou d'un système de traitement d'images selon la revendication 3.
